# EUROPEAN PATENT SPECIFICATION

(11) **EP 3 319 377 B1**
(45) Date of publication and mention of the grant of the patent: **20.01.2021**
(21) Application number: 15901409.1
(22) Date of filing: 18.08.2015
(51) Int. Cl.: H04W 56/00

(54) **ANCHOR MASTER NODE MANAGEMENT METHOD AND NODE**
VERFAHREN ZUR VERWALTUNG EINES ANKERMASTERKNOTENS UND KNOTEN
PROCÉDÉ DE GESTION DE NOEUD MAÎTRE D'ANCRAGE ET NOEUD

(43) Date of publication of application: 09.05.2018
(60) Divisional application: 20172578.5
(73) Proprietor: Huawei Technologies Co., Ltd., Longgang District Shenzhen, Guangdong 518129 (CN)
(72) Inventor: PANG, Gaokun, Shenzen Guangdong 518129 (CN); FANG, Ping, Shenzen Guangdong 518129 (CN); CHEN, Ji, Shenzen Guangdong 518129 (CN)
(74) Representative: Gill Jennings & Every LLP
(86) International application number: PCT/CN2015/087413
(87) International publication number: WO 2017/028205

(56) References cited:
- EP-A1- 2 894 935
- EP-A2- 2 835 915
- WO-A1-2014/176079
- WO-A1-2015/060651
- WO-A1-2015/069041
- WO-A1-2015/072796
- WO-A1-2015/117142
- WO-A1-2015/119454
- CN-A- 104 053 227
- CN-A- 104 278 800

## Description

### TECHNICAL FIELD

The present invention relates to the field of wireless communications technologies, and in particular, to an Anchor Master AM management method and a node.

### BACKGROUND

Currently, social, localization, and the like become a mainstream mode of the mobile Internet field. Particularly, with the proliferation of mobile nodes equipped with a wireless fidelity (Wireless-Fidelity, Wi-Fi) interface, in a Wi-Fi technology, a beacon (Beacon) frame is periodically sent by using a central node, so that an external node can be associated with the central node. However, there are limits on a network structure and data transmission in the 802.11 protocol. For example, when there is no central node, it is difficult to perform service discovery. Currently, a neighbor awareness networking (Neighbor Awareness Networking, NAN) mechanism is generally used to resolve this problem, so that multiple NAN nodes form a NAN cluster (Cluster). The nodes in a same NAN cluster have a same cluster identifier, and each node has its own attributes, including: role (Role) and state (State). There are two roles: a master node (Master) and a non-master node (non-Master). There are two states: synchronization (sync) and non-synchronization (non-sync). A node in a Sync state is responsible for maintaining cluster synchronization. The Master is in a sync state, and the non-Master may be in a sync state or a non-sync state. Each node further includes a Master Rank (Master Rank, MR), and a Master with a largest MR in the NAN cluster becomes an Anchor Master (Anchor Master, AM), and all other nodes keep time synchronization with the AM, so that synchronization of the entire NAN cluster is ensured. In the NAN cluster, a typical application scenario is: The nodes perform service discovery of each other before association. To perform the service discovery between the nodes, a node in the NAN cluster should operate over a NAN social (social) channel and keep an awake (awake) state within a specified time period. For example, a social channel on a 2.4 GHz channel is channel 6. In some scenarios, the NAN is required to run in a background for a long time. Therefore, energy saving control needs to be performed on a node in the NAN, and it is specified that the node wakes up only when a discovery window (Discovery Window, DW) arrives, so as to perform service discovery and cluster synchronization on the social channel.

In the prior art, nodes need to be synchronized frequently to ensure that there is no large deviation in two system clocks, that is, each Master and each Sync non-Master send, within a DW, a synchronization beacon (Sync Beacon) frame. According to an existing rule, when a node in the cluster receives a Sync Beacon frame of an AM, if an Anchor Master Rank (Anchor Master Rank, AMR) in the Sync Beacon frame is lower than AMRs recorded by most of nodes in the cluster and an MR of the node, and Medium Access Control (Medium Access Control, MAC) address information in the Sync Beacon frame is the same as MAC address information of the AM that is recorded by the node, most of the foregoing nodes may change, in a short time, their own roles to become AMs. Consequently, a large quantity of Sync Beacon frames need to be sent in a short time, and excessive air interface resources are consumed.

EP2894935A1 discloses: In a Neighborhood Awareness Network (NAN), a wireless device scans the available wireless network clusters, calculates a grade for each identified cluster based on information received from the wireless synchronization messages (beacons) and selects the cluster with the highest grade to join and operate. Moreover, non-selected clusters are ranked based on criteria that can include the published or subscribed services and hop count. The wireless device may, based on the ranks, choose to operate on one or more of the non-selected networks, too. To this end, it computes time allocations for operation in the plurality of wireless network clusters.

### SUMMARY

The present invention provides an Anchor Master AM management method and a node, so that a quantity of beacons sent by an AM in a NAN network in a short time can be reduced, and a waste of air interface resources is effectively reduced.

The present invention is defined by the appended claims.

In the embodiments of the present invention, a first node determines, according to first Anchor Master information, Anchor Master information in the first node, and an MR of the first node, whether to update the Anchor Master information in the first node, and sends a second synchronization beacon frame when the first node is in a synchronization state, so that another node is synchronized with the first node. This prevents, to some extent, a node that becomes an AM from sending a synchronization beacon frame, and effectively reduces a waste of air interface resources.

### BRIEF DESCRIPTION OF DRAWINGS

FIG. 1 is a flowchart of an Anchor Master AM management method according to an embodiment of the present invention;
FIG. 2 is a flowchart of another Anchor Master AM management method according to an embodiment of the present invention;
FIG. 3 is a flowchart of another Anchor Master AM management method according to an embodiment of the present invention;
FIG. 4 is a flowchart of another Anchor Master AM management method according to an embodiment of the present invention;
FIG. 5 is a schematic structural diagram of a node according to an embodiment of the present invention;
FIG. 6 is another schematic structural diagram of another node according to an embodiment of the present invention;
FIG. 7 is another schematic structural diagram of another node according to an embodiment of the present invention;
FIG. 8 is another schematic structural diagram of another node according to an embodiment of the present invention;
FIG. 9 is a schematic structural diagram of a node according to an embodiment of the present invention;
FIG. 10 is another schematic structural diagram of another node according to an embodiment of the present invention;
FIG. 11 is another schematic structural diagram of another node according to an embodiment of the present invention; and
FIG. 12 is another schematic structural diagram of another node according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

In the specification, claims, and accompanying drawings of the present invention, the terms "first", "second", and so on are intended to distinguish between similar objects but do not necessarily indicate a specific order or sequence. It should be understood that the data termed in such a way are interchangeable in proper circumstances so that the embodiments described herein can be implemented in other orders than the order illustrated or described herein. In addition, the terms "include", "have", or any other variant thereof are intended to cover a non-exclusive inclusion. For example, a process, a method, a system, a product, or a device that includes a series of steps or modules is not necessarily limited to the steps or modules that are expressly listed, but may include another step or module not expressly listed or inherent to the process, the method, the product, or the device. The module division in this specification is merely logical division, and there may be another division during implementation in actual application. For example, multiple modules may be combined or integrated into another system, or some features may be ignored or not performed. In addition, the displayed or discussed mutual couplings or direct couplings or communication connections may be implemented through some interfaces. The indirect couplings or communication connections between the modules may be implemented in electronic or another form, and this is not limited in this specification. In addition, the modules or sub-modules described as stand-alone components above may be or may be not separated physically, may be or may be not physical modules, or may be distributed in multiple circuit modules. Some or all of the modules may be selected according to an actual requirement to achieve the objectives of the solutions of the embodiments of the present invention.

An embodiment of the present invention provides an Anchor Master AM management method and a node that are used in a neighbor awareness network. The neighbor awareness network includes at least one cluster (Cluster), each cluster includes at least one node, and the node is a device in the cluster. These nodes form a distributed network. The node may be a network element or any device that has an equivalent status, and this is not specifically limited herein. Details are described in the following.

In this specification, attributes of a node include a node role and a node status. There are two roles: a master node (Master) and a non-master node (Non-Master). There are two node statuses: synchronization (Sync) and non-synchronization (Non-Sync). Masters are classified into an Anchor Master (Anchor Master, AM) and a non-Anchor Master. A node status of the Master is a synchronization state, and a node status of the non-Master may be a synchronization state or may be a non-synchronization state. A node in a Non-Master Sync state and a node in a Non-Master Non-Sync state are in a Non-Master role. Each node may have any one of the following attributes: a Master role, a Non-Master Sync state, or a Non-Master Non-Sync state. For example, if a node is in a Master role, it indicates that the node is in a synchronization state; if a node is in a Non-Master Sync state, it indicates that the node is in a synchronization state; or if a node is in a Non-Master Non-Sync state, it indicates that the node is in a non-synchronization state.

In addition, synchronization beacon (Sync Beacon) frames received by a node may be classified into a near Beacon frame and a far Beacon frame. The near Beacon frame is a Beacon frame that has a receive signal strength indicator (Receive Signal Strength Indicator, RSSI) greater than a first threshold, for example, RSSI=-60dBm; and the far Beacon frame is a Beacon frame that has an RSSI greater than a second threshold and less than the first threshold, for example, RSSI=-75dBm.

In this embodiment of the present invention, each node has its own MR, and a node status may be defined to prevent more nodes from becoming an AM, and Anchor Master information in an AM node is Anchor Master information that is of the AM node and that is recorded or saved in the AM node. In this embodiment of the present invention, to reduce a quantity of Sync Beacon frames that are sent in a neighbor awareness network in a short time, four solutions are mainly provided as follows:
I. A node is prevented from sending a Sync Beacon frame by using a preset status of the node.
   1. Other nodes other than an AM node are non-AM nodes. After updating Anchor Master information of a non-AM node according to a received Sync Beacon frame sent by another node, the non-AM node needs to determine whether a preset node status of the non-AM node is a synchronization state. If yes, a Sync Beacon frame is sent; or if no, a Sync Beacon frame is not sent. In this way, even if the non-AM node becomes the AM node (switching to or keeping a synchronization state), a Sync Beacon frame is not sent after a current node status is switched to a synchronization state, and a Sync Beacon frame is sent only after the foregoing determining condition is met. That is, not all AM nodes send a Sync Beacon frame. This limits, to some extent, a quantity of Sync Beacon frames sent by the AM node, and reduces a waste of air interface resources.
   2. When a non-AM node receives, within a second 1/2 of a time period of a DW, a Sync Beacon frame, even if an AMR in the Sync Beacon frame is lower than an AMR of the node, a node status and Anchor Master information of the node are not updated, that is, the non-AM node is prevented from becoming an AM node, and as a result a Sync Beacon frame is not sent. With this mechanism, a quantity of non-AM nodes that may become AM nodes in some special time periods may be effectively reduced, so that a quantity of Sync Beacon frames that are sent is reduced, and a waste of air interface resources is reduced.
   3. When a current node status of a node is a synchronization state, reference needs to be made to a previous node status of the node. That is, when the previous node status is a synchronization state, the node sends a Sync Beacon frame, or when the previous node status is a non-synchronization state, the node does not send a Sync Beacon frame, so that a condition for sending a Sync Beacon frame is further limited, and a quantity of Sync Beacon frames that are sent is reduced.
II. Whether to send a Sync Beacon frame is determined according to a detection result of an MR that is of another node and that is detected by a node in a time period.

Each node in a NAN network obtains and records an MR of another node in advance. When an AMR in a Sync Beacon frame that is received by a node is lower than a preset percentage of obtained MRs, and MAC address information in the Sync Beacon frame is the same as the MAC address information in the node, it indicates that an AMR of a node corresponding to the Sync Beacon frame in the neighbor awareness network is lower than most of nodes, and the Sync Beacon frame may be sent by a fake AM node, so that Anchor Master information of the node is not updated, and a Sync Beacon frame is not sent. Therefore, a quantity of AM nodes and a quantity of Sync Beacon frames are reduced, and air interface resources are saved.

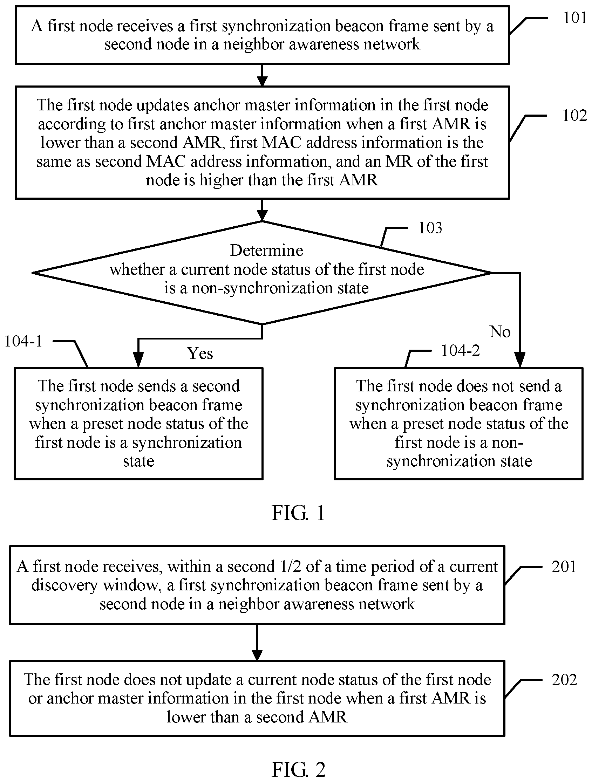

Referring to FIG. 1, in an embodiment of the present invention, a change of a first node in a non-AM role is used as an example to describe an Anchor Master AM management method in this embodiment of the present invention. The method includes the following steps.

101. A first node receives a first synchronization beacon frame sent by a second node in the neighbor awareness network.

The first synchronization beacon (Sync Beacon) frame carries first Anchor Master information; the first Anchor Master information includes a first Anchor Master Rank AMR; the first AMR includes first Medium Access Control MAC address information; and Anchor Master information in the first node includes a second AMR, and the second AMR includes second MAC address information.

In actual application, a message that can carry the first Anchor Master information may be a message in a Sync Beacon frame, a message in a service discovery frame (Service Discovery Frame, SDF), or another message in a NAN, or certainly may be a newly extended or newly defined message. A specific carrying manner is not limited in this specification.

In addition, the foregoing Sync Beacon frame may include at least one of: AMR information, hop count HC information, Anchor Master beacon transmission time (Anchor Master Beacon Transmission Time, AMBTT) information, and time synchronization function (Time Synchronization Function, TSF) information. The AM information, the AMR information, or MAC address information may be a corresponding information value, or may be in another expression manner, or may be a derivative value of these information values, or a derivative value of these information values combined with another information. This is not specifically limited in this specification.

For example, the foregoing MAC address information may be lower 6 bytes of the first AMR information, that is, the first AMR includes the first MAC address information, and the first AMR information may be specifically represented by an AMR, and others are similar.

102. The first node updates the Anchor Master information in the first node according to the first Anchor Master information when the first AMR is lower than the second AMR, the first MAC address information is the same as the second MAC address information, and a Master Rank MR of the first node is higher than the first AMR.

It should be noted that the Anchor Master information in the first node is Anchor Master information saved or recorded in the first node. The first Anchor Master information further includes a first HC and first AMBTT, and the Anchor Master information in the first node further includes a second HC, second AMBTT, and first TSF information.

When the following condition is met: AMR 1<AMR 2, MAC 1=MAC 2, and AMR 1<MR_{first node}, the first node updates the Anchor Master information in the first node:
setting the second AMR to an MR of the first node;
setting the second HC to 0;
setting the second AMBTT to 0.

In addition, when a comparison of MAC address information is performed, specifically, lower 6 bytes of the first AMR is compared with lower 6 bytes of the second AMR. There is no sequence between a comparison of AMRs, a comparison of MAC address information, and a comparison of an MR and an AMR.

103. The first node determines whether a preset node status of the first node is a synchronization state.

It should be noted that the preset node status is a predefined use state, or a use state specified in a standard. The preset node status may be a node status defined on a network side according to a preconfigured rule, or may be a status configured by a node itself. This is not specifically limited. The preset node status includes: a state of the first node before the first Sync Beacon frame is received, a state of the first node when a current discovery window DW starts, a state that is of the first node and that is in a previous DW, or the like (but is not limited to the node statuses of the three moments, provided that an objective of limiting a quantity of Sync Beacon frames or delaying sending of a Sync Beacon frame may be achieved). The preset node status specifically includes: a synchronization state and a non-synchronization state. When a node is in a Master role, the node is in a synchronization state; when a node is in Non-Master-Sync, the node is in a synchronization state; or when a node is in Non-Master-Non-Sync, the node is in a non-synchronization state.

That is, even if a current node status of the first node is switched to a synchronization state, it is still required to determine whether the preset node status is a synchronization state, that is, whether the node is in a Master role, or in a Non-Master-Sync state.

The preset node status may be saved in the first node, and is used for comparing node statuses.

104-1. The first node sends a second synchronization beacon frame when the preset node status of the first node is a synchronization state; or
104-2. The first node does not send a synchronization beacon frame when the preset node status of the first node is a non-synchronization state.

It should be noted that when the first node sends a Sync Beacon frame, the Sync Beacon frame carries updated Anchor Master information in the first node.

That is, even if the current node status of the first node is different from the preset node status, according to the preconfigured rule, the first node sends a Sync Beacon frame if the preset node status of the first node is a synchronization state. That the first node sends the Sync Beacon frame herein indicates that the first node can send a Sync Beacon frame, and a moment for sending a Sync Beacon frame may be any time, for example, a current discovery window, or a next discovery window.

Alternatively, when the preset node status of the first node is a non-synchronization state, even if the current node status of the first node is a synchronization state, the first node does not send a Sync Beacon frame.

For example, if the preset node status of the first node is a state of the first node before the first Sync Beacon frame is received, when the state of the first node before the first Sync Beacon frame is received is a Master state, the first node sends the second Sync Beacon frame.

For another example, if the preset node status of the first node is a state of the first node before the first Sync Beacon frame is received, when the state of the first node before the first Sync Beacon frame is received is a Non-Master Non-Sync state, the node does not send the second Sync Beacon frame.

In this embodiment of the present invention, a first node determines, according to first Anchor Master information, Anchor Master information in the first node, and an MR of the first node, whether to update the Anchor Master information in the first node, and sends a second Sync Beacon frame only when a preset node status of the first node is a synchronization state, so that another node is synchronized with the first node. This prevents, to some extent, a node that becomes an AM from sending a Sync Beacon frame, and effectively reduces a quantity of Sync Beacon frames, and occupancy and a waste of air interface resources.

Further, in this embodiment of the present invention, for example, a synchronization state of a node may be set, and preset node statuses are classified into a first synchronization state Sync 1 and a second synchronization state Sync 2. When the first node is in the Sync 1 (a Master state), the first node may randomly select a backoff number in [0, 15]. When the first node is in the Sync 2 (a Non-Master Sync state), the first node may randomly select a backoff number in [0, 31]. The backoff number represents a counter. Therefore, time for sending a Sync Beacon frame by different nodes may be staggered, network congestion is effectively reduced, sending time is delayed, and a large quantity of Sync Beacon frames are stacked in a short time. For any similarities in this specification, details are not described again.

It may be learned that, in this embodiment of the present invention, a moment for sending a Sync Beacon frame may further be limited (it may be understood as delayed sending). For example, the Sync Beacon frame is sent within a current discovery window or a next discovery window, or may be sent within a later discovery window. This is not specifically limited. A moment for sending is flexibly and properly selected, so that a conflict of a moment for sending a Sync Beacon frame is reduced to some extent, and nodes may be synchronized in a timely manner.

Optionally, in this embodiment of the present invention, before that the first node sends a second synchronization beacon frame when the preset node status of the first node is a synchronization state, the method further includes:

105. The first node determines whether a node status prior to the preset node status of the first node is a synchronization state.

When the node status prior to the preset node status of the first node is a synchronization state, the first node sends the second Sync Beacon frame; or
when the node status prior to the preset node status of the first node is a non-synchronization state, the first node does not send, within a current DW, the second Sync Beacon frame, but sends, within a next DW, the second Sync Beacon frame.

For example, if the preset node status of the first node is a state of the first node before the first Sync Beacon frame is received, when the state of the first node before the first Sync Beacon frame is received is a Master state, that is, a synchronization state; and further, if the previous node status is a Master state or a Non-Master Sync state, that is, a synchronization state, the node sends the second Sync Beacon frame. However, if the previous node status is a Non-Master Non-Sync, that is, a non-synchronization state, the node does not send, within the current discovery window, the second Sync Beacon frame, but sends, within the next discovery window, the second Sync Beacon frame.

In this optional solution, each node records a change of its own node status. Consecutive two times node statuses of a first node (certainly, there may be more than two node statuses, and more selection times indicates a better effect) are determined according to a new definition. The first node that becomes an AM is prevented from sending a Sync Beacon frame, and a quantity of Sync Beacon frames sent in a neighbor awareness network may be effectively reduced in a specific time period. This reduces a waste of air interface resources and effectively improves utilization of network resources, so that more opportunities for using air interface resources are provided for an SDF, service discovery between nodes may be performed in a timely manner, and utilization of the network resources is effectively improved.

Optionally, in this embodiment of the present invention, after that the first node updates the Anchor Master information in the first node according to the first Anchor Master information, the method further includes:

106. The first node receives a third synchronization beacon frame sent by a third node in the neighbor awareness network, where the third synchronization beacon frame carries third Anchor Master information, the third Anchor Master information includes a third AMR, and the updated Anchor Master information in the first node includes a fourth AMR. The method further includes:
skipping updating, by the first node, the Anchor Master information in the first node when the third AMR is lower than the fourth AMR; and sending, by the first node, within the next DW, a synchronization beacon frame if the first node is in a synchronization state; or
updating, by the first node, the updated Anchor Master information in the first node according to the third Anchor Master information when the third AMR is higher than the fourth AMR. Specifically, the first node may update the updated Anchor Master information in the first node according to the second synchronization beacon frame:
   setting the fourth AMR to the third AMR;
   setting the third HC to 1 (that is, adding 1 to a value of the second HC);
   setting the third AMBTT to the fourth AMBTT.

In this alternative solution, after the first node updates the Anchor Master information recorded by the first node, synchronization states of a node may further be classified into a first synchronization state Sync 1 and a second synchronization state Sync 2. The first node randomly selects a backoff number, and when the backoff number is reached, the first node sends the second Sync Beacon frame. Therefore, during counting of the backoff number, the first node may receive the third Sync Beacon frame after updating the Anchor Master information recorded by the first node and before sending the second Sync Beacon frame, or may receive the third Sync Beacon frame after sending the second Sync Beacon frame. A specific time sequence is not limited in this specification.

In addition, even if the third AMR is lower than the fourth AMR, the first node neither changes the current node status of the first node or the Anchor Master information in the first node, nor sends a Sync Beacon frame in a current window to enable another node to synchronize with the first node. This reduces, to some extent, a quantity of Sync Beacon frames, and reduces a waste of air interface resources. In addition, when the third AMR is equal to the fourth AMR, the first node may ignore the received third Sync Beacon frame without performing any processing.

Referring to FIG. 2, the following describes, from a perspective of limiting a change of a first node according to a moment for receiving a Sync Beacon frame, another Anchor Master AM management method in an embodiment of the present invention. The method includes the following steps.

201. A first node receives, within a second 1/2 of a time period of a current discovery window DW, a first synchronization beacon Sync Beacon frame sent by a second node in the neighbor awareness network.

The first Sync Beacon frame carries first Anchor Master information, the first Anchor Master information includes a first AMR, and Anchor Master information in the first node includes a second AMR.

It may be understood that the foregoing second 1/2 of a time period may be any time period within the second 1/2 of a time period, and indicate that a DW will expire, but is not limited to this critical point of 1/2. In a specific field, a DW will expire is set according to actual design of a network rule. For example, a last 2/5 of a time period may be set to indicate that a DW will expire. Dividing the time period for indicating that a DW will expire is not limited in this specification.

202. The first node does not update a current node status of the first node or the Anchor Master information in the first node when the first AMR is lower than the second AMR.

In this embodiment of the present invention, it is defined that, when a first node receives, within a second 1/2 of a time period of a DW, a first Sync Beacon frame, even if a first AMR is lower than a second AMR, the first node does not change a current node status of the first node and Anchor Master information in the first node. In this way, a device is prevented from becoming an AM when a discovery window ends, a Sync Beacon frame is sent beyond the window, and a node that may become an AM in some special time periods is effectively prevented from sending a Sync Beacon frame. Therefore, a quantity of AMs may be reduced in a short time, a quantity of Sync Beacon frames that are sent may be effectively reduced, and a waste of air interface resources is reduced.

It should be noted that based on the steps 201 and 202, this embodiment may further include steps 203 to 205:
203. Determine whether the current node status of the first node is a synchronization state.

204. The first node sends, within a next DW, a second synchronization beacon frame when the current node status of the first node is a synchronization state, where the second synchronization beacon frame carries the Anchor Master information in the first node.

205. The first node does not send a synchronization beacon frame when the current node status of the first node is a non-synchronization state.

Further, based on the steps 201 and 202, this embodiment may further include steps 206 to 210, so as to replace the steps 203 to 205.

206. The first node determines whether the current node status of the first node is a synchronization state.

207. The first node further determines whether a previous node status of the first node is a synchronization state when the current node status of the first node is a synchronization state.

208. The first node sends the second Sync Beacon frame when the previous node status of the first node is a synchronization state, where the second Sync Beacon frame carries the Anchor Master information in the first node.

209. The first node does not send a Sync Beacon frame when the previous node status of the first node is a non-synchronization state; and optionally, the first node does not send, within the current DW, a Sync Beacon frame, and sends, within a next DW, the second Sync Beacon frame.

210. The first node does not send a Sync Beacon frame when the current node status of the first node is a non-synchronization state.

In this embodiment, it is defined that, within a second 1/2 of a time period of a DW, even if a first node is in a synchronization state, a second Sync Beacon frame is not sent within the second 1/2 of a time period of a DW, but is sent within a next DW. Therefore, time for sending a Sync Beacon frame is effectively delayed, a node whose state changes, within the second 1/2 of a time period of the DW, into a synchronization state is prevented from sending a Sync Beacon frame, and unnecessary synchronization is reduced within a short time.

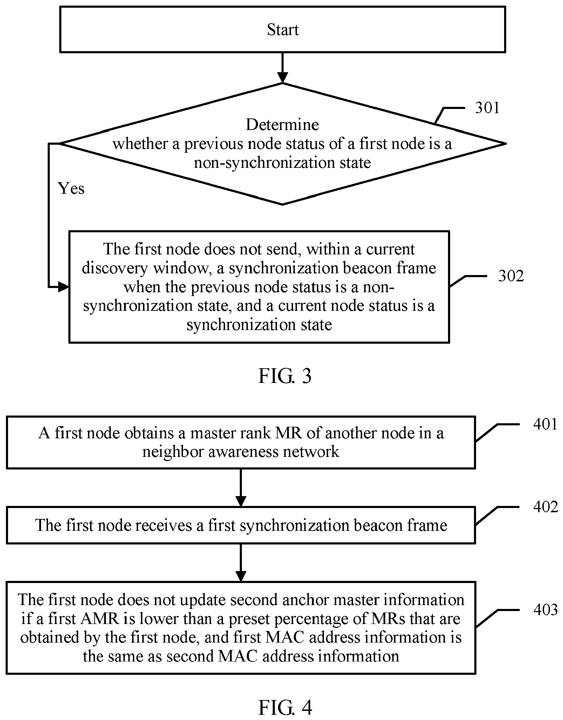

Referring to FIG. 3, the following describes, from a perspective of limiting a quantity of Sync Beacon frames according to a node status, another Anchor Master AM management method in an embodiment of the present invention. Each node records a change of its own node status. The method includes the following steps.

301. Determine whether a previous node status of the first node is a non-synchronization state.

302. The first node does not send, within a current discovery window DW, the Sync Beacon frame when the previous node status of the first node is a non-synchronization state, and a current node status of the first node is a synchronization state.

Optionally, the method further includes the following step:

303. When the current node status of the first node is a synchronization state, and a node status of the first node is, within a second 1/2 of a time period of the current DW, a synchronization state, the first node does not send, within the current DW, a Sync Beacon frame; and sends, within a next DW, the Sync Beacon frame.

In this embodiment, consecutive two node statuses of a first node (certainly, there may be more than two node statuses, and more selection times indicates a better effect) are determined according to a new definition, so that the first node that becomes an AM is prevented from sending the foregoing Sync Beacon frame, and a quantity of Sync Beacon frames sent in a neighbor awareness network may be effectively reduced in a specific time period. This reduces a waste of air interface resources, so that more opportunities for using air interface resources are provided for an SDF, service discovery between nodes may be performed in a timely manner, and utilization of network resources is effectively improved.

In addition, the first node sends the second Sync Beacon frame when the previous node status of the first node is a synchronization state.

For example, if the current node status of the first node is a Master state or an AM state, and the previous node status is a Master state or a Non-Master Sync state, the node sends the second Sync Beacon frame.

For another example, a node state of the first node when a current DW starts is considered. If the state of the first node is a Master state or Non-Master Sync state when the current DW starts, the current node status of the first node is a Master state or an AM, and the previous node status is a Master state or a Non-Master Sync state, the first node sends the second Sync Beacon frame.

Referring to FIG. 4, the following describes another Anchor Master AM management method in an embodiment of the present invention. The method includes the following steps.

401. A first node obtains a Master Rank MR of another node in the neighbor awareness network.

The first node may obtain an MR corresponding to a node that is in a synchronization state from a synchronization beacon Sync Beacon frame sent by the node that is in a synchronization state in the neighbor awareness network, and record the MR.

402. The first node receives a first synchronization beacon Sync Beacon frame sent by a second node in the neighbor awareness network.

The first Sync Beacon frame carries first Anchor Master information, the first Anchor Master information includes a first Anchor Master Rank AMR, the first AMR includes first MAC address information, and second Anchor Master information in the first node includes second MAC address information.

403. The first node does not update the second Anchor Master information if the first AMR is lower than a preset percentage of MRs that are obtained by the first node, and the first MAC address information is the same as the second MAC address information.

The preset percentage may be any value ranging from 70% to 100%.

For example, the first node records MRs of N nodes in the neighbor awareness network. After the first node receives the first Sync Beacon frame, if the first AMR is lower than MRs of 70%-100% of nodes, it indicates that an MR of a node that sends the first Sync Beacon frame is lower than MRs of most of nodes in the neighbor awareness network, and the node that sends the first Sync Beacon frame may be fake, or may be a node that attacks the network. Therefore, the first node does not need to update Anchor Master information or a node status of the first node, and unnecessary state change and synchronization may be reduced.

In this embodiment of the present invention, an MR of another node in a neighbor awareness network is obtained in advance. After a Sync Beacon frame is received, the first Anchor Master information is compared with the second Anchor Master information. When the first AMR is lower than a preset percentage of obtained MRs, and the first MAC address information is the same as the second MAC address information, it indicates that an AMR of a node corresponding to the Sync Beacon frame in the neighbor awareness network is lower than MRs of most of nodes. The second Anchor Master information does not need to be updated according to the first Anchor Master information, and a Sync Beacon frame does not need to be sent, so that a quantity of Sync Beacon frames is reduced, and air interface resources are saved.

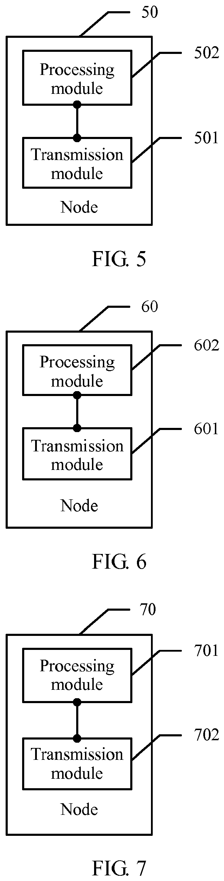

Referring to FIG. 5, the following describes a node in an embodiment of the present invention. The node 50 is used in a neighbor awareness network. The node 50 includes:
a transmission module 501, configured to receive a first synchronization beacon frame sent by a second node in the neighbor awareness network, where the first synchronization beacon frame carries first Anchor Master information, the first Anchor Master information includes a first Anchor Master Rank AMR, the first AMR includes first Medium Access Control MAC address information, Anchor Master information in the first node includes a second AMR, and the second AMR includes second MAC address information; and
a processing module 502, configured to update the Anchor Master information in the first node according to the first Anchor Master information when the first AMR is lower than the second AMR, the first MAC address information is the same as the second MAC address information, and a Master Rank MR of the first node is higher than the first AMR.

The transmission module 501 is further configured to send a second synchronization beacon frame when the processing module 502 determines that a preset node status of the first node is a synchronization state. Optionally, the transmission module 501 may send, within a current discovery window or a next discovery window, the second synchronization beacon frame.

Alternatively, the transmission module 501 does not send a synchronization beacon frame when the processing module 502 determines that the preset node status of the first node is a non-synchronization state.

The preset node status of the first node includes: a state of the first node before the transmission module 501 receives the first synchronization beacon frame, a state of the first node when the current discovery window starts, or a state that is of the first node and that is within a previous discovery window. For a specific application scenario, reference may be made to step 103 of the embodiment in this specification. For similarities, details are not described again.

In this embodiment of the present invention, a processing module 502 determines, according to first Anchor Master information, Anchor Master information in a first node, and an MR of the first node, whether to update the Anchor Master information in the first node, and sends a second synchronization beacon frame when a preset node status of the first node is a synchronization state, so that another node is synchronized with the first node. This prevents, to some extent, a node that becomes an AM from sending a synchronization beacon frame, and effectively reduces a quantity of synchronization beacon frames, and occupancy and a waste of air interface resources.

Optionally, the processing module 502 in this embodiment of the present invention is further configured to:
determine whether a node status prior to the preset node status of the first node is a synchronization state.

The transmission module 501 is further configured to: send the second synchronization beacon frame when the processing module 502 determines that the node status prior to the preset node status of the first node is a synchronization state; or
when the processing module 502 determines that the node status prior to the preset node status of the first node is a non-synchronization state, skip sending, within a current discovery window, the second synchronization beacon frame; and send, within a next discovery window, the second synchronization beacon frame.

Optionally, the transmission module 501 in this embodiment of the present invention is further configured to:
receive a third synchronization beacon frame sent by a third node in the neighbor awareness network, where the third synchronization beacon frame carries third Anchor Master information, the third Anchor Master information includes a third AMR, and updated Anchor Master information in the first node includes a fourth AMR.

The processing module 502 is further configured to: skip updating the Anchor Master information in the first node when the third AMR is lower than the fourth AMR; and send, within the next discovery window, a synchronization beacon frame if the first node is in a synchronization state; or
update the updated Anchor Master information in the first node according to the third Anchor Master information when the third AMR is higher than the fourth AMR.

Referring to FIG. 6, the following describes another node in an embodiment of the present invention. The node 60 is used in a neighbor awareness network. The node 60 includes:
a transmission module 601, configured to receive, within a second 1/2 of a time period of a current discovery window, a first synchronization beacon frame sent by a second node in the neighbor awareness network, where the first synchronization beacon frame carries first Anchor Master information, the first Anchor Master information includes a first Anchor Master Rank AMR, and Anchor Master information in the first node includes a second AMR; and
a processing module 602, configured to skip updating a current node status of the first node and the Anchor Master information in the first node when the first AMR is lower than the second AMR.

In this embodiment of the present invention, it is defined that, when a first node receives, within a second 1/2 of a time period of a discovery window, a first synchronization beacon frame, even if a first AMR is lower than a second AMR, a processing module 602 does not change a current node status of the first node or Anchor Master information in the first node. With this mechanism, a node that may become an AM in some special time periods may be effectively prevented from sending a synchronization beacon frame. A quantity of AMs may be reduced in a short time, and a quantity of synchronization beacon frames for sending may be effectively reduced, so that a waste of air interface resources is reduced.

Optionally, the transmission module 601 and the processing module 602 in this embodiment of the present invention may further perform operations in one of the following cases:

In the first case:

The processing module 602 in this embodiment of the present invention is further configured to:
determine whether the current node status of the first node is a synchronization state.

The transmission module 601 in this embodiment of the present invention is further configured to: send, within a next discovery window, a second synchronization beacon frame when the processing module determines that the current node status of the first node is a synchronization state; or
skip sending a synchronization beacon frame when the processing module 602 determines that the current node status of the first node is in a non-synchronization state.

In the second case:

The processing module 602 in this embodiment of the present invention is further configured to:
determine whether the current node status of the first node is a synchronization state; and
further determine whether a previous node status of the first node is a synchronization state when the current node status of the first node is a synchronization state.

The transmission module 601 in this embodiment of the present invention is further configured to: send, within a next discovery window, the second synchronization beacon frame when the processing module 602 determines that the previous node status of the first node is a synchronization state;
skip sending a synchronization beacon frame when the processing module 602 determines that the previous node status of the first node is a non-synchronization state; or
skip sending a synchronization beacon frame when the processing module 602 determines that the current node status of the first node is in a non-synchronization state.

Referring to FIG. 7, the following describes another node in an embodiment of the present invention. The node 70 is used in a neighbor awareness network. The node 70 includes:
a processing module 701, configured to determine whether a previous node status of the first node is a non-synchronization state; and
a transmission module 702, configured to skip sending, within a current discovery window, a synchronization beacon frame when the processing module 701 determines that the previous node status of the first node is a non-synchronization state, and a current node status of the first node is a synchronization state or a non-synchronization state.

In this embodiment, consecutive two node statuses of a first node (certainly, there may be more than two node statuses, and more selection times indicates a better effect) are determined by a processing module 701 according to a new definition. The first node that becomes an AM is prevented from sending the foregoing synchronization beacon frame, and a quantity of synchronization beacon frames sent in a neighbor awareness network may be effectively reduced in a specific time period. This reduces a waste of air interface resources, so that more opportunities for using air interface resources are provided for an SDF, service discovery between nodes may be performed in a timely manner, and utilization of network resources is effectively improved.

Optionally, the transmission module 702 in this embodiment of the present invention is further configured to:
when the processing module 701 determines that the current node status of the first node is a synchronization state, and a node status that is of the first node and that is within a second 1/2 of a time period of the current discovery window is a synchronization state, skip sending, within the current discovery window, a synchronization beacon frame; and send, within a next discovery window, the synchronization beacon frame.

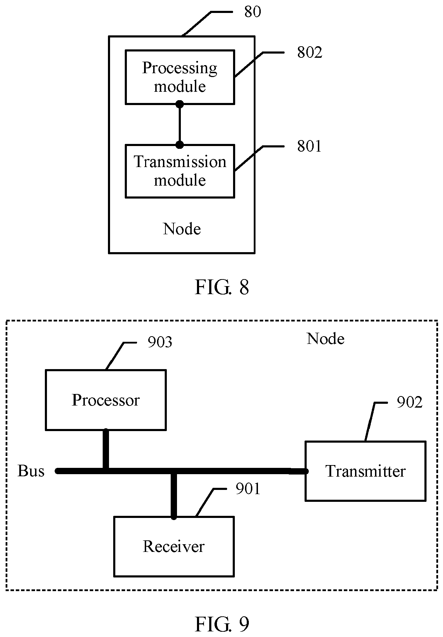

Referring to FIG. 8, the following describes another node in an embodiment of the present invention. The node 80 is used in a neighbor awareness network. The node 80 includes:
a transmission module 801, configured to: obtain a Master Rank MR of another node in the neighbor awareness network; and
receive a first synchronization beacon frame sent by a second node in the neighbor awareness network, where the first synchronization beacon frame carries first Anchor Master information, the first Anchor Master information includes a first Anchor Master Rank AMR, the first AMR includes first Medium Access Control MAC address information, and second Anchor Master information in the first node includes second MAC address information; and
a processing module 802, configured to skip updating the second Anchor Master information when the first AMR obtained by the transmission module 801 is lower than a preset percentage of MRs that are obtained by the transmission module, and the first MAC address information is the same as the second MAC address information.

In this embodiment of the present invention, a transmission module 801 obtains an MR of another node in a neighbor awareness network in advance. After the transmission module 801 receives a synchronization beacon frame, a processing module 802 compares the first Anchor Master information with the second Anchor Master information. When the first AMR is lower than a preset percentage of obtained MRs, and the first MAC address information is the same as the second MAC address information, it indicates that an AMR of a node corresponding to the synchronization beacon frame in the neighbor awareness network is lower than MRs of most of nodes. The second Anchor Master information does not need to be updated according to the first Anchor Master information, and the transmission module 801 does not need to send a synchronization beacon frame, so that a quantity of synchronization beacon frames is reduced, and air interface resources are saved.

It may be understood that when a transmission node described in the embodiments corresponding to FIG. 5 to FIG. 8 and corresponding alternative embodiments receives or obtains some information, the transmission node may be understood as a receiver; and when the transmission node sends a message, the transmission node may be understood as a transmitter. In addition, a processing module may be understood as a processor that performs some or all of the steps in the foregoing embodiments.

The present invention further provides a computer storage medium. The medium stores a program. When the program is executed, some or all of the steps in the foregoing Anchor Master AM management method are performed.

The present invention further provides a computer storage medium. The medium stores a program. When the program is executed, the foregoing node performs some or all of the steps in the Anchor Master AM management method.

FIG. 9 is another schematic structural diagram of a user node 90 according to an embodiment of the present invention. The user node 90 may include at least one network interface or another communications interface, at least one receiver 901, at least one transmitter 902, at least one processor 903, and a memory 904, so as to implement connection and communication between these apparatuses. Communication connections between the system gateway and at least one another network element by using at least one network interface (the network interface may be wired or wireless), and the Internet, a wide area network, a local area network, a metropolitan area network, or the like may be used.

The memory 904 may include a read-only memory and a random access memory, and provides an instruction and data for the processor 903. A part of the memory 904 may further include a high-speed random access memory (RAM, Random Access Memory), or may include a non-volatile memory (non-volatile memory).

The memory 904 stores the following elements: an executable module or a data structure, or a subset thereof, or an extended set thereof:
operation instructions: including various operation instructions, which are used to implement various operations; and
an operating system: including various system programs, which are used to implement various basic services and process hardware-based tasks.

In this embodiment of the present invention, the processor 903 performs the following operations by calling an operation instruction (the operation instruction may be stored in an operating system) stored in the memory 904:
receiving, by using the receiver 901, a first synchronization beacon frame sent by a second node in the neighbor awareness network, where the first synchronization beacon frame carries first Anchor Master information, the first Anchor Master information includes a first Anchor Master Rank AMR, the first AMR includes first Medium Access Control MAC address information, Anchor Master information in the first node includes a second AMR, and the second AMR includes second MAC address information;
updating, by the first node, the Anchor Master information in the first node according to the first Anchor Master information when the first AMR is lower than the second AMR, the first MAC address information is the same as the second MAC address information, and a Master Rank MR of the first node is higher than the first AMR; and
sending a second synchronization beacon frame by using the transmitter 902 when a preset node status of the first node is a synchronization state; or
skipping sending a synchronization beacon frame when a preset node status of the first node is a non-synchronization state.

The preset node status of the first node includes: a state of the first node stays before the first synchronization beacon frame is received, a state of the first node stays when the current discovery window starts, or a state that is of the first node and that is within a previous discovery window.

Optionally, the processor 903 sends, within the current discovery window or a next discovery window, the second synchronization beacon frame by using the transmitter 902.

In some implementations, before the first node sends a second synchronization beacon frame, the processor 903 may further perform the following steps:
determining whether a node status prior to the preset node status of the first node is a synchronization state; and
sending, by using the transmitter 902, the second synchronization beacon frame when the node status prior to the preset node status of the first node is a synchronization state; or
when the node status prior to the preset node status of the first node is a non-synchronization state, skipping sending, by using the transmitter 902, within a current discovery window, the second synchronization beacon frame; and sending, within a next discovery window, the second synchronization beacon frame.

In some implementations, after the first node updates the Anchor Master information in the first node according to the first Anchor Master information, the processor 903 may further perform the following steps:
receiving, by using the receiver 901, a third synchronization beacon frame sent by a third node in the neighbor awareness network, where the third synchronization beacon frame carries third Anchor Master information, the third Anchor Master information includes a third AMR, and updated Anchor Master information in the first node includes a fourth AMR; and
skipping updating the Anchor Master information in the first node when the third AMR is lower than the fourth AMR; and sending, within the next discovery window, a synchronization beacon frame by using the transmitter 902 if the first node is in a synchronization state; or
updating the updated Anchor Master information in the first node according to the third Anchor Master information when the third AMR is higher than the fourth AMR.

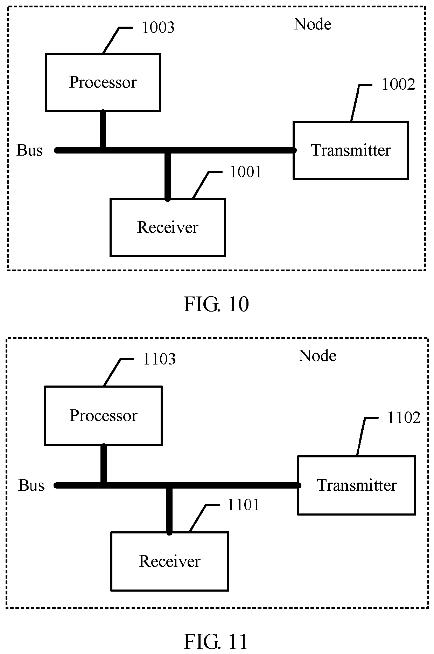

FIG. 10 is another schematic structural diagram of a user node 100 according to an embodiment of the present invention. The user node 100 may include at least one network interface or another communications interface, at least one receiver 1001, at least one transmitter 1002, at least one processor 1003, and a memory 1004, so as to implement connection and communication between these apparatuses. Communication connections between the system gateway and at least one another network element by using at least one network interface (the network interface may be wired or wireless), and the Internet, a wide area network, a local area network, a metropolitan area network, or the like may be used.

The memory 1004 may include a read-only memory and a random access memory, and provides an instruction and data for the processor 1003. A part of the memory 1004 may further include a high-speed random access memory (RAM, Random Access Memory), or may include a non-volatile memory (non-volatile memory).

The memory 1004 stores the following elements: an executable module or a data structure, or a subset thereof, or an extended set thereof:
operation instructions: including various operation instructions, which are used to implement various operations; and
an operating system: including various system programs, which are used to implement various basic services and process hardware-based tasks.

In this embodiment of the present invention, the processor 1003 performs the following operations by calling an operation instruction (the operation instruction may be stored in an operating system) stored in the memory 1004:
receiving, by using the receiver 1001, within a second 1/2 of a time period of a current discovery window, a first synchronization beacon frame sent by a second node in the neighbor awareness network, where the first synchronization beacon frame carries first Anchor Master information, the first Anchor Master information includes a first AMR, and Anchor Master information in the first node includes a second AMR; and
skipping updating a current node status of the first node and the Anchor Master information in the first node when the first AMR is lower than the second AMR.

In some implementations, the processor 1003 may further perform the following steps:
determining whether the current node status of the first node is a synchronization state; and
sending, within a next discovery window, a second synchronization beacon frame by using the transmitter 1002 when the current node status of the first node is a synchronization state; or
skipping sending a synchronization beacon frame when the current node status of the first node is a non-synchronization state.

In some implementations, the processor 1003 may further perform the following steps:
determining whether the current node status of the first node is a synchronization state;
further determining whether a previous node status of the first node is a synchronization state when the current node status of the first node is a synchronization state; and
sending, within a next discovery window, the second synchronization beacon frame by using the transmitter 1002 when the previous node status of the first node is a synchronization state; or
skipping sending a synchronization beacon frame when the previous node status of the first node is a non-synchronization state; or
skipping sending a synchronization beacon frame when the current node status of the first node is a non-synchronization state.

FIG. 11 is another schematic structural diagram of a user node 110 according to an embodiment of the present invention. The user node 110 may include at least one network interface or another communications interface, at least one receiver 1101, at least one transmitter 1102, at least one processor 1103, and a memory 1104, so as to implement connection and communication between these apparatuses. Communication connections between the system gateway and at least one another network element by using at least one network interface (the network interface may be wired or wireless), and the Internet, a wide area network, a local area network, a metropolitan area network, or the like may be used.

The memory 1104 may include a read-only memory and a random access memory, and provides an instruction and data for the processor 1103. A part of the memory 1104 may further include a high-speed random access memory (RAM, Random Access Memory), or may include a non-volatile memory (non-volatile memory).

The memory 1104 stores the following elements: an executable module or a data structure, or a subset thereof, or an extended set thereof:
operation instructions: including various operation instructions, which are used to implement various operations; and
an operating system: including various system programs, which are used to implement various basic services and process hardware-based tasks.

In this embodiment of the present invention, the processor 1103 performs the following operations by calling an operation instruction (the operation instruction may be stored in an operating system) stored in the memory 1104:
determining whether a previous node status of the first node is a non-synchronization state; and
skipping sending, within a current discovery window, a synchronization beacon frame by using the transmitter 1102 when the previous node status of the first node is a non-synchronization state, and a current node status of the first node is a synchronization state or a non-synchronization state.

In some implementations, the processor 1103 may further perform the following step:
when the current node status of the first node is a synchronization state, and a node status that is of the first node and that is within a second 1/2 of a time period of a current discovery window is a synchronization state, skipping sending, within the current discovery window, a synchronization beacon frame, but sending, within a next discovery window, the synchronization beacon frame by using the transmitter 1102.

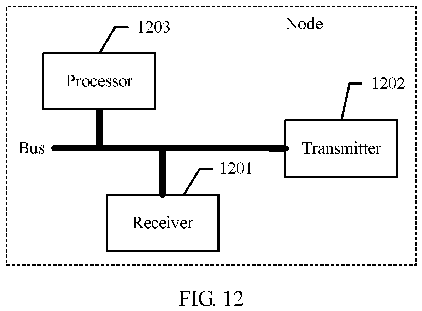

FIG. 12 is another schematic structural diagram of a user node 120 according to an embodiment of the present invention. The user node 120 may include at least one network interface or another communications interface, at least one receiver 1201, at least one transmitter 1202, at least one processor 1203, and a memory 1204, so as to implement connection and communication between these apparatuses. Communication connections between the system gateway and at least one another network element by using at least one network interface (the network interface may be wired or wireless), and the Internet, a wide area network, a local area network, a metropolitan area network, or the like may be used.

The memory 1204 may include a read-only memory and a random access memory, and provides an instruction and data for the processor 1203. A part of the memory 1204 may further include a high-speed random access memory (RAM, Random Access Memory), or may include a non-volatile memory (non-volatile memory).

The memory 1204 stores the following elements: an executable module or a data structure, or a subset thereof, or an extended set thereof:
operation instructions: including various operation instructions, which are used to implement various operations; and
an operating system: including various system programs, which are used to implement various basic services and process hardware-based tasks.

In this embodiment of the present invention, the processor 1203 performs the following operations by calling an operation instruction (the operation instruction may be stored in an operating system) stored in the memory 1204:
obtaining a Master Rank MR of another node in the neighbor awareness network by using the receiver1201;
receiving, by using the receiver 1201, a first synchronization beacon frame sent by a second node in the neighbor awareness network, where the first synchronization beacon frame carries first Anchor Master information, the first Anchor Master information includes a first Anchor Master Rank AMR, the first AMR includes first Medium Access Control MAC address information, and second Anchor Master information in the first node includes second MAC address information; and
skipping updating the second Anchor Master information if the first AMR is lower than a preset percentage of MRs that are obtained by the first node, and the first MAC address information is the same as the second MAC address information.

In the foregoing embodiments, the description of each embodiment has respective focuses. For a part that is not described in detail in an embodiment, reference may be made to related descriptions in other embodiments.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, function units in the embodiments of the present invention may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer node (which may be a personal computer, a server, or a network node) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

An Anchor Master AM management method and a node that are provided in the present invention are described in detail above. Specific examples are used to illustrate the principle and implementations of the present invention in this specification. The description about the embodiments is merely provided to help understand the method and core ideas of the present invention. In addition, a person of ordinary skill in the art can make variations and modifications to the present invention in terms of the specific implementations and application scopes according to the ideas of the present invention. In conclusion, the content of this specification shall not be construed as a limitation to the present invention.

## Claims

1. An Anchor Master AM node management method, wherein the method is used in a neighbor awareness network and comprises:
receiving, by a first node, a first synchronization beacon frame sent by a second node in the neighbor awareness network, wherein the first synchronization beacon frame carries first Anchor Master information, the first Anchor Master information comprises a first Anchor Master Rank AMR, the first AMR comprises first Medium Access Control MAC address information, wherein Anchor Master information in the first node comprises a second AMR, and the second AMR comprises second MAC address information; **characterized in** comprising:
updating, by the first node, the Anchor Master information in the first node when the first AMR is lower than the second AMR, the first MAC address information is the same as the second MAC address information, and a Master Rank MR of the first node is higher than the first AMR; and
sending, by the first node, a second synchronization beacon frame when a preset node status of the first node is a synchronization state; or
skipping sending, by the first node, a synchronization beacon frame when a preset node status of the first node is a non-synchronization state;
wherein the preset node status of the first node comprises: a state of the first node within a previous discovery window.

2. The method according to claim 1, wherein the Anchor Master information in the first node further comprises a second hop count, HC, and a second Anchor Master beacon transmission time, AMBTT, and wherein the updating comprises:
updating the second AMR value to equal the MR value of the first node;
updating the second HC value to equal zero; and
updating the second AMBTT value to equal zero.

3. The method according to claim 1 or 2, wherein the method further comprises:
switching, by the first node, the role of the first node from a non-AM to an AM when the first AMR is lower than the second AMR, the first MAC address information is the same as the second MAC address information, and the MR of the first node is higher than the first AMR

4. The method according to any one of claims 1-3, wherein the sending, by the first node, a second synchronization beacon frame comprises:
sending, by the first node, within the current discovery window or the next discovery window, the second synchronization beacon frame.

5. A first node, wherein the first node is used in a neighbor awareness network and comprises:
a communications module, configured to receive a first synchronization beacon frame sent by a second node in the neighbor awareness network, wherein the first synchronization beacon frame carries first Anchor Master information, the first Anchor Master information comprises a first Anchor Master Rank AMR, the first AMR comprises first Medium Access Control MAC address information, wherein Anchor Master information in the first node comprises a second AMR, and the second AMR comprises second MAC address information; and said first node being **characterized by**:
a processing module, configured to update the Anchor Master information in the first node when the first AMR is lower than the second AMR, the first MAC address information is the same as the second MAC address information, and a Master Rank MR of the first node is higher than the first AMR; wherein
the communications module is further configured to send a second synchronization beacon frame when the processing module determines that a preset node status of the first node is a synchronization state; or
the communications module is further configured to skip sending a synchronization beacon frame when the processing module determines that a preset node status of the first node is a non-synchronization state;
wherein the preset node status of the first node nude comprises: a state of the first node within a previous discovery window.

6. The first node according to claim 5, wherein the Anchor Master information in the first node nude further comprises a second hop count, HC, and a second Anchor Master beacon transmission time, AMBTT, and wherein the processing module is configured to update the Anchor Master information in the first node by:
update the second AMR value to equal the MR value of the first node; update the second HC value to equal zero; and update the second AMBTT value to equal zero.

7. The first node according to claim 5 or 6, wherein the processing module is further configured to:
switch the role of the first node from a non-AM to an AM when the first AMR is lower than the second AMR, the first MAC address information is the same as the second MAC address information, and the MR of the first node is higher than the first AMR

8. The first node according to any one of claims 5-7, wherein the communications module is specifically configured to:
send, within the current discovery window or the next discovery window, the second synchronization beacon frame.

9. A computer program product, comprising computer program code, which, when executed by a computer unit, will cause the computer unit to perform the method of any one of claims 1 to 4.

10. A computer-readable storage medium having a program recorded thereon; wherein the program causes a computer to execute the method of any one of claims 1 to 4.

## Patentansprüche

1. Anker-Master-AM-Knoten-Verwaltungsverfahren, wobei das Verfahren in einem Nachbar-Bewusstseins-Netzwerk verwendet wird und Folgendes umfasst:
Empfangen, durch einen ersten Knoten, eines ersten Synchronisations-Beacon-Frame, der von einem zweiten Knoten im Nachbar-Bewusstseins-Netzwerk gesendet wird, wobei der erste Synchronisations-Beacon-Frame eine erste Anker-Master-Information trägt, wobei die erste Anker-Master-Information einen ersten Anker-Master-Rang-AMR umfasst, wobei der erste AMR eine erste MAC-Adressinformation der Medien-Zugriffskontrolle umfasst, wobei die Anker-Master-Information im ersten Knoten eine zweite AMR umfasst, und wobei der zweite AMR eine zweite MAC-Adressinformation umfasst;
**gekennzeichnet durch**:
Aktualisieren der Anker-Master-Information im ersten Knoten durch den ersten Knoten, wenn der erste AMR niedriger als der zweite AMR ist, die erste MAC-Adressinformation mit der zweiten MAC-Adressinformation übereinstimmt und ein Master-Rang MR des ersten Knotens höher als der erste AMR ist; und
Senden eines zweiten Synchronisations-Beacon-Frame durch den ersten Knoten, wenn ein voreingestellter Knotenstatus des ersten Knotens ein Synchronisationsstatus ist; oder
Überspringen des Sendens eines Synchronisations-Beacon-Frame durch den ersten Knoten, wenn ein voreingestellter Knotenstatus des ersten Knotens ein Nicht-Synchronisationsstatus ist;
wobei der voreingestellte Knotenstatus des ersten Knotens Folgendes umfasst:
einen Status des ersten Knotens innerhalb eines vorherigen Erkennungsfensters.

2. Verfahren nach Anspruch 1, wobei die Anker-Master-Information im ersten Knoten weiterhin eine zweite Hop-Anzahl, HC, und eine zweite Anker-Master-Beacon-Übertragungszeit, AMBTT, umfasst und wobei das Aktualisieren Folgendes umfasst:
Aktualisieren des zweiten AMR-Wertes, so dass er dem MR-Wert des ersten Knotens entspricht;
Aktualisieren des zweiten HC-Wertes auf Null; und
Aktualisieren des zweiten AMBTT-Wertes auf Null.

3. Verfahren nach Anspruch 1 oder 2, wobei das Verfahren ferner Folgendes umfasst:
Umschalten der Rolle des ersten Knotens von einem Nicht-AM zu einem AM durch den ersten Knoten, wenn der erste AMR niedriger als der zweite AMR ist, die erste MAC-Adressinformation mit der zweiten MAC-Adressinformation übereinstimmt und der MR des ersten Knotens höher als der erste AMR ist.

4. Verfahren nach einem der Ansprüche 1-3, wobei das Senden eines zweiten Synchronisations-Beacon-Frame durch den ersten Knoten Folgendes umfasst:
Senden des zweiten Synchronisations-Beacon-Frame durch den ersten Knoten innerhalb des aktuellen Erkennungsfensters oder des nächsten Erkennungsfensters.

5. Erster Knoten, wobei der erste Knoten in einem Nachbar-Bewusstseins-Netzwerk verwendet wird und Folgendes umfasst:
Kommunikationsmodul, das dafür konfiguriert ist, einen ersten Synchronisations-Beacon-Frame zu empfangen, der von einem zweiten Knoten im Nachbar-Bewusstseins-Netzwerk gesendet wird, wobei der erste Synchronisations-Beacon-Frame eine erste Anker-Master-Information trägt, wobei die erste Anker-Master-Information einen ersten Anker-Master-Rang AMR umfasst, wobei der erste AMR eine erste MAC-Adressinformation zur Medien-Zugriffskontrolle umfasst, wobei die Anker-Master-Information im ersten Knoten einen zweiten AMR umfasst und wobei der zweite AMR eine zweite MAC-Adressinformation umfasst; und
wobei der erste Knoten **gekennzeichnet ist durch**:
ein Verarbeitungsmodul, das dafür konfiguriert ist, die Anker-Master-Information im ersten Knoten zu aktualisieren, wenn der erste AMR niedriger als der zweite AMR ist, die erste MAC-Adressinformation mit der zweiten MAC-Adressinformation übereinstimmt und ein Master-Rang MR des ersten Knotens höher als der erste AMR ist;
wobei das Kommunikationsmodul ferner dafür konfiguriert ist, einen zweiten Synchronisations-Beacon-Frame zu senden, wenn das Verarbeitungsmodul feststellt, dass ein voreingestellter Knotenstatus des ersten Knotens ein Synchronisationsstatus ist; oder
das Kommunikationsmodul ferner dafür konfiguriert ist, das Senden eines Synchronisations-Beacon-Frame zu überspringen, wenn das Verarbeitungsmodul bestimmt, dass ein voreingestellter Knotenstatus des ersten Knotens ein Nicht-Synchronisationsstatus ist;
wobei der voreingestellte Knotenstatus des ersten Knotens Folgendes umfasst:
einen Status des ersten Knotens innerhalb eines vorherigen Erkennungsfensters.

6. Erster Knoten nach Anspruch 5, wobei die Anker-Master-Information im ersten Knoten weiterhin eine zweite Hop-Anzahl, HC, und eine zweite Anker-Master-Beacon-Übertragungszeit, AMBTT, umfasst und wobei das Verarbeitungsmodul dafür konfiguriert ist, die Anker-Master-Information im ersten Knoten wie folgt zu aktualisieren:
Aktualisieren des zweiten AMR-Wertes, sodass er dem MR-Wert des ersten Knotens entspricht;
Aktualisieren des zweiten HC-Wertes auf Null; und
Aktualisieren des zweiten AMBTT-Wertes auf Null.

7. Erster Knoten nach Anspruch 5 oder 6, wobei das Verarbeitungsmodul ferner für Folgendes konfiguriert ist:
Umschalten der Rolle des ersten Knotens von einem Nicht-AM auf einen AM, wenn der erste AMR niedriger als der zweite AMR ist, die erste MAC-Adressinformation mit der zweiten MAC-Adressinformation übereinstimmt und der MR des ersten Knotens höher als der erste AMR ist.

8. Erster Knoten nach einem der Ansprüche 5-7, wobei das Kommunikationsmodul speziell für den folgenden Zweck konfiguriert ist:
Senden des zweiten Synchronisations-Beacon-Frame innerhalb des aktuellen Erkennungsfensters oder des nächsten Erkennungsfensters.

9. Computerprogrammprodukt, umfassend einen Computerprogrammcode, der bei seiner Ausführung durch eine Computereinheit die Computereinheit veranlasst, das Verfahren nach einem der Ansprüche 1 bis 4 durchzuführen.

10. Computerlesbares Speichermedium mit einem darauf aufgezeichneten Programm; wobei das Programm einen Computer veranlasst, das Verfahren nach einem der Ansprüche 1 bis 4 auszuführen.

## Revendications

1. Procédé de gestion de nœud de maître d'ancrage AM, le procédé étant utilisé dans un réseau de sensibilisation de voisinage et comprenant :
la réception, par un premier nœud, d'une première trame de balise de synchronisation envoyée par un second nœud dans le réseau de sensibilisation de voisinage, la première trame de balise de synchronisation portant les premières informations de maître d'ancrage, les premières informations de maître d'ancrage comprenant un premier rang de maître d'ancrage AMR, le premier AMR comprenant des premières informations d'adresse de commande d'accès au support MAC, dans lequel les informations de maître d'ancrage dans le premier nœud comprennent un second AMR, et le second AMR comprend des secondes informations d'adresse MAC ;
**caractérisé en ce qu'**il comprend :
la mise à jour, par le premier nœud, des informations de maître d'ancrage dans le premier nœud lorsque le premier AMR est inférieur au second AMR, les premières informations d'adresse MAC sont les mêmes que les secondes informations d'adresse MAC, et un rang maître MR du premier nœud est supérieur au premier AMR ; et
l'envoi, par le premier nœud, d'une seconde trame de balise de synchronisation lorsqu'un état de nœud prédéfini du premier nœud est un état de synchronisation ; ou
le saut de l'envoi, par le premier nœud, d'une trame de balise de synchronisation lorsqu'un état de nœud prédéfini du premier nœud est un état de non-synchronisation ;
dans lequel l'état de nœud prédéfini du premier nœud comprend :
un état du premier nœud à l'intérieur d'une fenêtre de découverte précédente.

2. Procédé selon la revendication 1, dans lequel les informations de maître d'ancrage dans le premier nœud comprennent en outre un second compte de sauts, HC et un second temps de transmission de balise de maître d'ancrage, AMBTT, et dans lequel la mise à jour comprend :
la mise à jour de la seconde valeur AMR pour égaler la valeur MR du premier nœud ;
la mise à jour de la seconde valeur HC à zéro ; et
la mise à jour de la seconde valeur AMBTT à zéro.

3. Procédé selon la revendication 1 ou 2, le procédé comprenant en outre :
la commutation, par le premier nœud, du rôle du premier nœud d'un non-AM à un AM lorsque le premier AMR est inférieur au second AMR, les premières informations d'adresse MAC sont les mêmes que les secondes informations d'adresse MAC, et le MR du premier nœud est supérieur au premier AMR.

4. Procédé selon l'une quelconque des revendications 1 à 3, dans lequel l'envoi, par le premier nœud, d'une seconde trame de balise de synchronisation comprend :
l'envoi, par le premier nœud, à l'intérieur de la fenêtre de découverte actuelle ou de la fenêtre de découverte suivante, de la seconde trame de balise de synchronisation.

5. Premier nœud dans lequel le premier nœud est utilisé dans un réseau de sensibilisation de voisinage et comprend :
un module de communication, configuré pour recevoir une première trame de balise de synchronisation envoyée par un second nœud dans le réseau de sensibilisation de voisinage, la première trame de balise de synchronisation portant les premières informations de maître d'ancrage, les premières informations de maître d'ancrage comprenant un premier rang de maître d'ancrage AMR, le premier AMR comprenant des premières informations d'adresse de commande d'accès au support MAC, les informations de maître d'ancrage dans le premier nœud comprenant un second AMR, et le second AMR comprenant des secondes informations d'adresse MAC ; et
ledit premier nœud étant **caractérisé par** :
un module de traitement, configuré pour mettre à jour les informations de maître d'ancrage dans le premier nœud lorsque le premier AMR est inférieur au second AMR, les premières informations d'adresse MAC sont les mêmes que les secondes informations d'adresse MAC, et un rang maître MR du premier nœud est supérieur au premier AMR ;
dans lequel le module de communication est configuré en outre pour envoyer une seconde trame de balise de synchronisation lorsque le module de traitement détermine qu'un état de nœud prédéfini du premier nœud est un état de synchronisation ; ou
le module de communication est configuré en outre pour sauter l'envoi d'une trame de balise de synchronisation lorsque le module de traitement détermine qu'un état de nœud prédéfini du premier nœud est un état de non-synchronisation ;
dans lequel l'état de nœud prédéfini du premier nœud comprend :
un état du premier nœud à l'intérieur d'une fenêtre de découverte précédente.

6. Premier nœud selon la revendication 5, dans lequel les informations de maître d'ancrage dans le premier nœud comprennent en outre un second compte de sauts HC, et un second temps de transmission de balise de maître d'ancrage, AMBTT, et dans lequel le module de traitement est configuré pour mettre à jour les informations de maître d'ancrage dans le premier nœud par :
la mise à jour de la seconde valeur AMR pour égaler la valeur MR du premier nœud ;
la mise à jour de la seconde valeur HC à zéro ; et
la mise à jour de la seconde valeur AMBTT à zéro.

7. Premier nœud selon la revendication 5 ou 6, dans lequel le module de traitement est configuré en outre pour :
commuter le rôle du premier nœud d'un non-AM à un AM lorsque le premier AMR est inférieur au second AMR, les premières informations d'adresse MAC sont les mêmes que les secondes informations d'adresse MAC, et le MR du premier nœud est supérieur au premier AMR.

8. Premier nœud selon l'une quelconque des revendications 5 à 7, dans lequel le module de communication est plus précisément configuré pour :
envoyer, à l'intérieur de la fenêtre de découverte actuelle ou de la fenêtre de découverte suivante, la seconde trame de balise de synchronisation.

9. Produit-programme informatique, comprenant un code de programme informatique, qui, lorsqu'il est exécuté par une unité informatique, amène l'unité informatique à exécuter le procédé selon l'une quelconque des revendications 1 à 4.

10. Support d'informations lisible par ordinateur sur lequel est enregistré un programme ;
dans lequel le programme amène un ordinateur à exécuter le procédé selon l'une quelconque des revendications 1 à 4.
